# EUROPEAN PATENT APPLICATION

(11) **EP 3 185 401 A1**
(43) Date of publication of application: **28.06.2017**
(21) Application number: 16205398.7
(22) Date of filing: 20.12.2016
(51) Int. Cl.: H02K 1/26, H02K 23/40, H02K 27/00, H02K 7/14

(54) **ELECTRIC MOTOR FOR VACUUM CLEANER**

(30) Priority: 22.12.2015 JP 2015250189
(71) Applicant: Yamamoto Electric Corporation, Sukagawa-shi Fukushima 962-0818 (JP)
(72) Inventor: Endo, Kazuya, Sukagawa-shi, Fukushima (JP)
(74) Representative: Intellectual Property Services GmbH

(57) **Abstract**

There is provided an electric motor suitable for a vacuum cleaner, which achieves high output and high efficiency in operation at a rotation of 30,000 rpm or more, required for a motor for a vacuum cleaner, as well as enables its life to be extended. The electric motor includes a rotor core and a commutator that are coaxially fixed to a rotating shaft, and a stator core arranged around the rotor core. The rotor core and the stator core comprises a plurality of rotor core elements and a plurality of stator core elements, each formed of a thin electromagnetic steel plate having a thickness of less than 0.3 mm, are stacked and fixed in layers. Each of the plurality of rotor core elements has a diameter including a tip of each of teeth, within a range of approximately 35 mm to 40 mm, and each of the teeth has a length in a longitudinal direction that is one-third or more of a radius of the rotor core element. At least surfaces of the respective rotor core elements, facing each other, are fixed with adhesive to form the rotor core.

## Description

### BACKGROUND OF THE INVENTION

### TECHNICAL FIELD

The present invention relates to an electric motor, and more particularly to an electric motor suitable for a vacuum cleaner.

### BACKGROUND ART

Vacuum cleaners in recent years require higher suction performance, smaller size and lighter weight, higher durability, and lower cost than before. Thus, an electric motor that is a primary element for suction also requires high output, high efficiency, and long life.

Particularly, recent vacuum cleaners have required an electric motor to have a high rotation speed per minute of 30,000 rpm (r/m) or more.

Electric motors including a brush and a commutator have been widely used.

Even a normal commutator causes a brush to wear due to mechanical contact therebetween. When the commutator rotates at a high speed, wear loss of the brush is increased to reduce a life of the brush. Then, a switching period for rectification in the commutator is reduced, which easily causes rectification sparks. As a result, the wear loss of the brush may be further increased.

To reduce wear of a brush at a high rotation speed of 30,000 rpm or more, various materials, such as a carbon brush, have been used to extend the life of a brush, but sufficient result may not be obtained from those materials.

To extend the life of a brush, rectification performance of an electric motor may be improved to increase resistance for centrifugal force caused by a high rotation speed. However, since each of the rectification performance and resistance greatly depends on various parameters, such as the size of a motor, it is impossible to easily identify a parameter, thereby making solution difficult.

In addition, an electric motor is required to acquire a large magnetic flux density to efficiently obtain an alternating magnetic field, as well as required to reduce iron loss caused in accordance with a frequency. Although the iron loss includes eddy-current loss, hysteresis loss, and net loss, it is not easy to combine acquisition of a large magnetic flux density with reduction in the iron loss.

While Japanese Patent No. 2765830 discloses a method as a conventional art to extend the life of a brush, in which the number of turns of a front coil in a rotation direction is set more than the number of turns of a rear coil therein, in the same slot of an armature, to reduce reactance voltage to reduce rectification sparks, thereby extending the life of a brush, unfortunately, structure becomes complicated to cause a manufacturing method to be complicated.

Thus, it is required to improve rectification performance and wear resistance of a brush, as well as to reduce iron loss, such as hysteresis loss, to improve efficiency.

The present application has been made to provide an electric motor suitable for a vacuum cleaner, which achieves high output and high efficiency in operation at a rotation of 30,000 rpm or more, particularly required for a motor for a vacuum cleaner, as well as enables its life to be extended.

### SUMMARY OF INVENTION

The present invention provides an electric motor including: a rotor core that is fixed to a rotating shaft, and that radially extends in a direction orthogonal to an axial direction of the rotating shaft to rotate with the rotating shaft at the center; a commutator that is coaxially fixed to the rotating shaft, and that rotates with the rotating shaft to be brought into sliding contact with a brush; and a stator core arranged around the rotor core. The rotor core and the stator core are assemblies in which a plurality of rotor core elements and a plurality of stator core elements, each formed of a thin electromagnetic steel plate, are stacked and fixed in layers. Particularly, each of the plurality of rotor core elements has a diameter including a tip of each of teeth constituting slots, within a range of approximately 35 mm to 40 mm, and each of the teeth has a length in a longitudinal direction that is one-third or more of a radius of the rotor core element. Each of the rotor core element and the stator core element has a thickness of less than 0.3 mm, and at least surfaces of the respective rotor core elements, facing each other, are fixed with adhesive to form a stacked body of the rotor core elements.

In the present invention, the same material is used for the electromagnetic steel plates constituting the rotor core and the stator core, and a thickness of each of the electromagnetic steel plates is substantially 0.25 mm. More preferably, iron loss in W15/50 is 2.30 w/kg or less, and iron loss in W10/400 is 14.0 w/kg or less, and also magnetic flux density B50(T) is 1.62 or more.

In the electric motor of the present invention, the rotor core has ten or more slots, and preferably twenty two slots.

In addition, the stator core element has a pole portion (23) comprising a tip and a neck wherein a substantially linear side is formed between the tip and the neck so that a distance between the extending side and a pole face of the pole portion which faces a tip face of the teeth of the rotor core, namely a width of the pole portion, increases from the tip of the pole portion at each side to the center of the pole portion.

Reducing resistance of winding wire, as well as iron loss and reactance, while a space of core winding of the rotor core is secured, can contribute to an electric motor capable of reducing wear of a brush at high efficiency. Particularly, the rotor core elements in the shape of a thin plate, which constitute the rotor core and are adjusted to a predetermined thickness or less, are fixed to each other with adhesive. As a result, it becomes possible to improve efficiency of airflow in a range of a diameter of an air circulation opening that is usually used for a vacuum cleaner, as compared with conventional caulking.

Also in the stator core, a width of the pole portion is increased from each end of the pole portion to the center of the pole portion. As a result, it becomes possible to obtain large efficiency of motor without posing an obstacle to a magnetic field path by preventing a large change in magnetic flux density.

### BRIEF DESCRIPTION OF DRAWINGS

Fig. 1 is a structural view of an electric air blower 100 in accordance with an embodiment of the present invention;
Fig. 2 is a side view of an electromagnetic rotating unit 40 of the electric air blower 100 in accordance with the embodiment of the present invention;
Fig. 3A is a front view of a rotor core 11 as viewed from a direction of a rotating shaft (a center axis);
Fig. 3B is a side view of the rotating shaft of the rotor core as viewed from a vertical direction;
Fig. 4A is a front view of a stator core as viewed from an axial direction;
Fig. 4B is a side view of the stator core; and
Fig. 5 is a graph comparing data acquired from a vacuum cleaner provided with an electric motor including the rotor core formed by fixing rotor core elements in the shape of a thin plate with each other with adhesive, and data acquired from a vacuum cleaner provided with an electric motor including rotor core formed by caulking rotor core elements.

### DETAILED DESCRIPTION OF THE EMBODIMENT

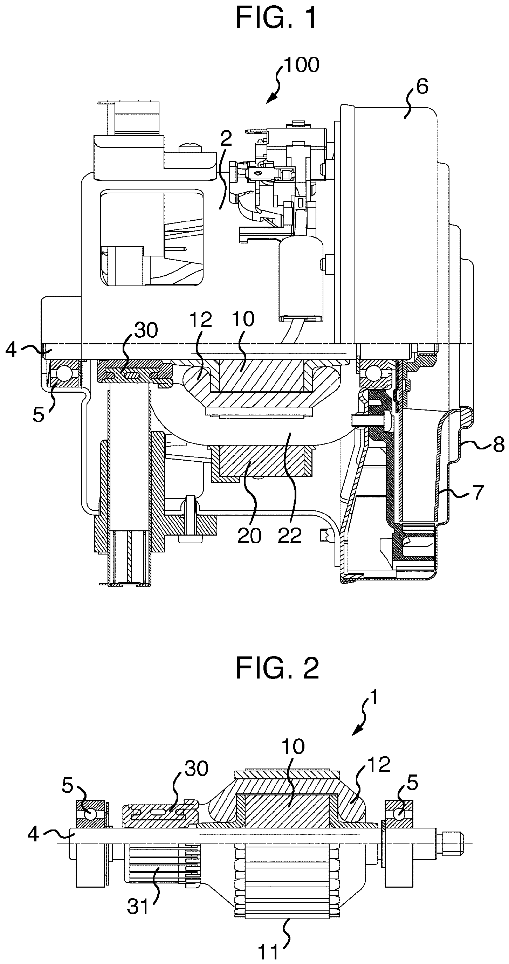

Fig. 1 is a schematic view showing an electric air blower 100 in a first embodiment of the present invention.

An electric air blower 100 has a fan casing unit 6 provided on one side, and an electric motor casing 2 provided on the other side. In the electric motor casing 2, there are provided a rotating shaft 4 that is rotatably supported by a bearing 5, a commutator 30 and a rotor 10 that are fixed to the rotating shaft 4 to be rotated with the rotating shaft 4, and a stator 20 that is fixed in the electric motor casing 2 so as to surround the periphery of the rotor 10. In the fan casing unit 6, there are provided an impeller 7 that is fixed to the rotating shaft 4 to be rotated, and an impeller casing 8 that is formed integrally with the fan casing unit 6 to partially surround the impeller 7.

Fig. 2 shows an electric rotating unit 1 for generating rotational driving force, in the electric motor. The commutator 30 includes a plurality of conducting commutator pieces 31. The plurality of commutator pieces 31 is provided parallel to an axial direction of the rotating shaft 4 so as to extend radially outward in a radial manner. In the commutator piece 31, at least an outside surface is electrically exposed so that a brush (not shown) is brought into sliding contact with the exposed surface. The brush is electrically connected to field winding of the stator 20.

In electrical action, sliding contact between the brush and the commutator 30 causes electric current to flow into rotor windings 12 of the rotor 10, and rectifying action of the commutator 30 generates magnetic flux in the rotor 10 and the stator 20 so that interaction of the magnetic flux generates rotational torque. Then, the rotor 10 rotates with the rotating shaft 4 against the stator 20 so that rotating force of the rotor 10 rotates the impeller 7 through the rotating shaft 4. Since basic structures of the commutator piece 31 and the brush are well-known to a person skilled in the art, further description of them is omitted here.

The rotor 10 adjacent to the commutator 30 and provided in the rotating shaft 4 includes a plurality of slots as described later in detail, and electric wires are wound in the plurality of slots to form the plurality of rotor windings 12. The plurality of rotor windings 12 and connection terminals of the commutator 30 are electrically connected while electromagnetically corresponding to each other to rotationally drive the electric motor.

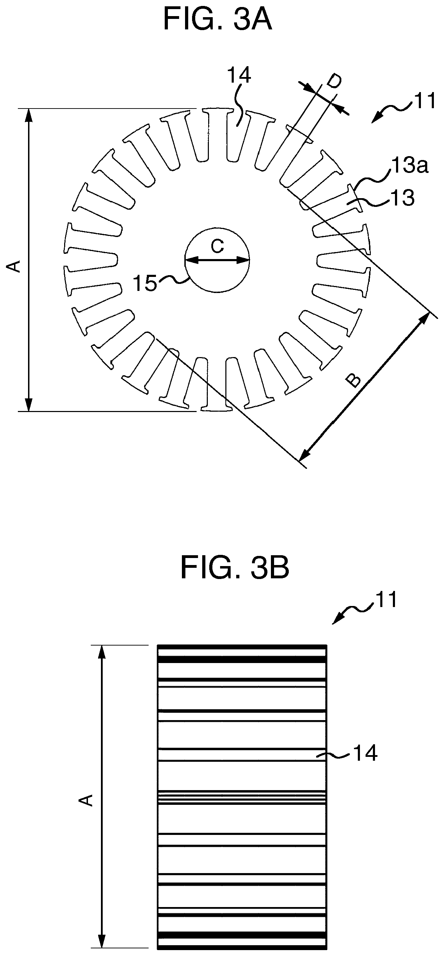

Fig. 3A is a front view of a rotor core 11 constituting the rotor 10 as viewed from an axial direction of the rotating shaft 4. The rotor core 11 includes a plurality of slots 14 and teeth 13, which are alternately formed.

The present example uses the rotor core 11 with twenty two slots and the commutator 30 including commutator pieces capable of having at least twenty segments (twenty two segments in the present example), for example, to reduce induction voltage (reactance voltage) to be developed at the time of rectification caused when segments rotationally move with shaft rotation, or when the brush leaves a segment to move to the subsequent segment, thereby preventing sparks from occurring. As a result, wear of the brush is reduced to enable also a life of the electric motor itself to be prolonged.

In addition, a thin electromagnetic steel plate with predetermined electromagnetic characteristics described later is used to allow the rotor core 11 itself to have a relatively large number of slots, or at least ten slots, and twenty two slots in this example, and to allow the slot to be formed over a large portion of the diameter of the entire rotor core. Accordingly, winding is further facilitated to enable a winding wire thicker than before to be used. As a result, it becomes possible to reduce resistance of winding wire that may cause sparks.

Specifically, the rotor core 11 includes slots 14 whose respective bottoms are provided at corresponding predetermined positions in a radial direction from an axis of the core in a circumferential direction at equal intervals. Accordingly, the plurality of teeth 13 in the same shape of a substantially T-shape in the radial direction, viewed from the axial direction, and the slots 14 in a U-shape, each of which is provided between adjacent teeth, are provided along the circumferential direction at equal intervals in a radial manner.

With reference to Fig. 3A, dimensions of the rotor core 11 are as follows: A is approximately 38 mm; B is approximately 24.8 mm; C is approximately 8 mm; and a width of a main portion of the teeth 13 is approximately 2.2 mm. A height of the teeth 13 defined by (A-B)/2 is approximately 6.6 mm, and the height of the teeth 13 is at least one-third or more of the radius of 19 mm of the rotor core element.

Electric wire is wound around the plurality of teeth 13 in a coil shape through the plurality of slots 14 extending in the axial direction, and is fixed with varnish or the like to form the rotor core 11.

The rotor core 11 of the electric motor can be formed by stacking a plurality of electromagnetic steel plates in the shape of a thin plate in layers. As described before, the rotor core 11 has a relatively large number of slots, and length of the slot is set to be in a predetermined ratio or more to a diameter of the rotor core, measured at the tip of the teeth of the rotor core, to allow the slots to occupy a relatively wide portion in an area within a diameter of the entire rotor core 11. As a result, a diameter of winding is increased to reduce resistance of winding wire to enable improving efficiency of the motor.

However, a large alternating magnetic field needs to be efficiently acquired from a substantially reduced area of the rotor core in which the area within the diameter of the entire rotor core is eliminated by the slots. Thus, high magnetic flux density needs to be achieved immediately in response to the alternating magnetic field, and sufficient motor characteristics need to be acquired by reducing iron loss in accordance with frequency characteristics for the slots.

As known to a person skilled in the art, the iron loss includes eddy-current loss, hysteresis loss, and net loss, and the eddy-current loss and the hysteresis loss serve as representative iron loss.

To reduce iron loss to achieve high magnetic flux density in accordance with an alternating magnetic field, an electromagnetic steel plate with a very small thickness of 0.3 mm or less, 0.25 mm in the present example, is formed into the plane shape of Fig. 3A, and then a plurality of electromagnetic steel plates are stacked in layers to form an assembly of the rotor core 11.

The thin electromagnetic steel plate is provided on its surface with an insulating coat, such as chromium-free organic coating, to reduce eddy-current that occurs in the surface, and constitutes a thick rotor core composed of multiple layers to prevent the eddy-current from occurring.

To develop electromagnetic characteristics in accordance with hysteresis loss and an alternating magnetic field to achieve characteristics as an electric motor, iron loss of the thin electromagnetic steel plate is set as follows: W15/50 is 2.30 w/kg or less; W10/400 is 14.0 w/kg or less; and magnetic flux density B50(T) is 1.62 or more.

Measurement is based on JIS C-2550(2000) wherein W15/50 designates iron loss in a maximum magnetic flux density of 1.5 Tesla at a frequency of 50 Hz; W10/400 designates iron loss in a maximum magnetic flux density of 1.0 Tesla at a frequency of 400 Hz; and B50(T) designates a magnetic flux density at a magnetization force of 5,000 A/m.

The electromagnetic steel plate defined in the present example is a very thin plate of 0.25 mm, and thus it is easy to form the rotor core into a specific shape like the present example. In addition, reducing weight of the rotor core itself enables reducing damage to a mechanical portion, which is to be caused by load applied by accelerated increase in centrifugal force at high rotation speed of a motor. Further, weight of other parts than the rotor core can be relatively increased, and thus a thicker material or shape, with high mechanical strength, is available for the winding wire or the like. As a result, it becomes possible to prevent breakage or damage of an electric wire or the like, caused by high rotationally driving.

Increasing thickness of the rotor core increases the amount of electromagnetic steel plates, and accordingly efficiency of airflow is improved, however, external sizes and weight increase. The rotor core also needs to be small enough to be available for a vacuum cleaner. Elements of the rotor core are made thinner, and stacked by increasing the number of elements to form the rotor core with a total thickness of 21 mm. As a result, it becomes possible to provide an electric motor that is available for a vacuum cleaner, and that allows the vacuum cleaner to achieve required performance.

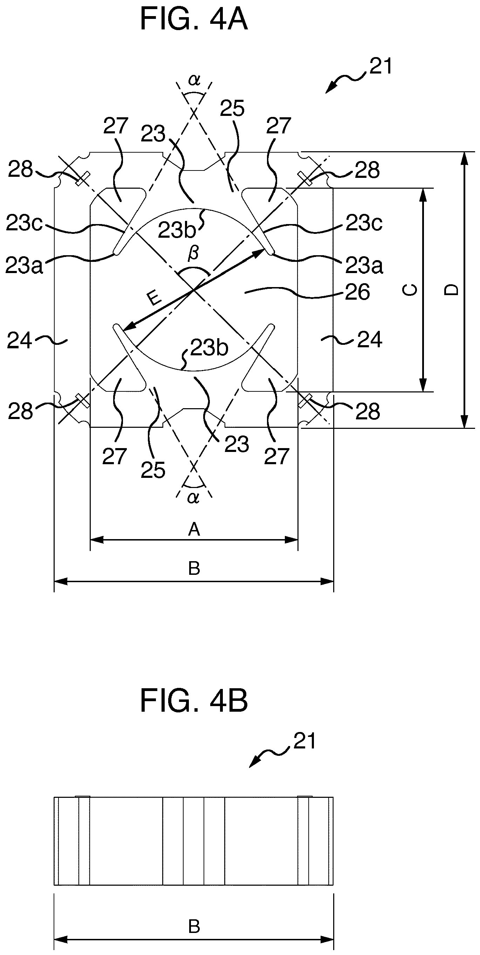

Fig. 4A shows a stator core 21 as viewed from an axial direction of the electric motor, and Fig. 4B is a side view of the stator core 21. The stator core 21 includes two pole portions 23 that face each other, and each of which is connected to a yoke 24 that is a passage of magnetic flux, at an opposite position. The rotor core 11 is rotatably arranged in a space 26 between the pole portions 23 facing each other.

Each of the pole portions 23 includes an arcuate pole face 23b facing an edge face of each of the teeth 13 of the rotor core 11, and a neck portion 25 connecting the yoke 24 and the pole face 23b to each other so as to allow them to magnetically communicate with each other. Other spaces 27 are formed between from the neck portion 25 to the pole portion 23, and the yoke 24, on both sides, and allow field winding 22 (refer to Fig. 1) to be sufficiently wound around the neck portion 25 through the spaces 27. The commutator 30 includes a brush that is electrically connected to field winding of the stator 20.

With reference to Fig. 4A, dimensions of the stator core 21 are as follows: A is approximately 49.8 mm; B is approximately 67 mm; C is approximately 48.8 mm; D is approximately 66 mm; and a distance E between the pole faces 23b of the respective pole portions 23, facing each other, is approximately 39 mm.

To allow an electric wire to be wound around the pole portion 23 over the neck portion 25 to form field winding, the yoke 24 is formed in a belt-like substantially quadrilateral shape, and sides 23c, which define the spaces 27 on both sides of the pole portion 23, are formed in substantially straight lines so as to extend to intersect with each other with an angle α forming a predetermined angle, such as approximately 62 degrees. Length of the pole face 23b of the pole portion 23 is set so that eight of the teeth 13 of the rotor core 11, which is rotatably attached in the space 26, can be arranged along the pole face 23b to allow sufficient magnetic flux density to occur from the pole portion 23 to the yoke.

Magnetic flux density at a center portion of the pole portion 23, connecting to the yoke 24, is higher than that at a tip 23a of the pole portion 23. Thus, the pole portion 23 is formed so that its width increases from the tip 23a of the pole portion 23 to the center portion to uniform the magnetic flux density in the pole portion 23, thereby preventing magnetic field lines from being non-uniform.

As the space 27 increases, an allowable maximum number of turns of field winding increases. Thus, if the neck portion is small, overall length of field winding used for winding the neck portion by the same number of turns is reduced. Accordingly, the reduction in length is effective for costs, and reduces resistance of the field winding as well as weight of the field winding.

The angle α described above defined by the intersected lines extending from the sides 23c is determined in consideration of the following: increasing the space 27; the number of teeth 13 that allows the pole face 23b of the pole portion 23, and edge faces of the respective teeth 13 of the rotor core 11, to magnetically interact with each other; and a width of the pole portion 23 that tapers from the center portion of the pole portion 23 to the tip 23a of the pole portion 23 to allow magnetic flux density to become more uniform as much as possible toward the center of the pole portion 23, and then a range of 60 to 64 degrees is preferable.

It is preferable that length of the stator core 21 in the axial direction is substantially equal to that of the rotor core 11 so that the stator core 21 has magnetism correlation with the rotor core 11 throughout the entire length. Thus, in the present example, the length of the stator core 21 in the axial direction is set at 21 mm to correspond to the length of rotor core 11 in the axial direction that is 21 mm.

If the stator core uses the same material as that of the rotor core to have the same basic iron loss characteristics as those of the rotor core, manufacturing can be efficiently managed.

As with the rotor core, the stator core can be formed by stacking the stator core elements, each of which is formed of a thin electromagnetic steel plate, and has the same shape and thickness, in layers to be integrally assembled.

Each of the stator core elements in a thin plate shape, constituting the stator core 21, and each of the rotor core elements in a thin plate shape, constituting the rotor core 11, are simultaneously punched in one pressing by using one die to maintain a corresponding relationship between electromagnetism of the thin electromagnetic steel plate of the stator core element and that of the rotor core element.

Accordingly, the stator core element is formed of an electromagnetic steel plate that has the same basic electromagnetic characteristics as those of the rotor core element, such as the following under measurement based on JIS C-2550(2000): iron loss in W15/50 is 2.30 w/kg or less; iron loss in W10/400 is 14.0 w/kg or less; and magnetic flux density B50(T) is 1.62 or more.

Since the rotor core and the stator core are formed of very thin electromagnetic steel plates, it has been found that there is a problem in which caulking strength may become unstable and an insulating coat may be damaged in caulking operation of fixing between a plurality of rotor core element layers and stator core element layers, composed of the plurality of electromagnetic steel plates, in a manufacturing process, whereby much eddy-current flows to increase flow loss.

Particularly, in the rotor core required to rotate at high speed, large eddy-current occurs to increase influence of the flow loss. To solve the problem, the present example allows the rotor core to be composed of a plurality of layers that is formed by fixing thin electromagnetic steel plates to each other with adhesive. It is preferable to use insulating adhesive in consideration of the eddy-current, however, if influence of eddy-current caused by adhesive itself is little, the adhesive does not always need insulation. Meanwhile, since the stator core 21 is a part of a stator, the stator core 21 does not rotationally drive and receive force caused by large acceleration, as compared with the rotor core. Thus, the stator core 21 may be formed by joining and fixing all stator core elements by caulking. In the present example, recessed portions 28 for caulking are provided at four respective corners of the yoke of each of the rotor core elements to allow the rotor core elements to be fixed by caulking.

Next, to acquire a result of a performance test using the rotor core and the stator core, a comparison performance test between an electric motor in which only rotor core elements are fixed with adhesive, and an electric motor in which both of rotor core elements and stator core elements are carefully fixed by a conventional caulking method, has been performed.

Table 1 below shows average values of results of a plurality of tests of an electric motor in which a rotor core formed by stacking 84 rotor core elements, each of which has a thickness of 0.25 mm. In the rotor core elements, faces of adjacent rotor core elements facing each other are fixed with adhesive. Stator core elements are fixed by the conventional caulking method.

Table 2 shows average values of results of a plurality of tests of an electric motor in which a rotor core is formed by stacking 84 rotor core elements that are the same as those in Table 1. The rotor core elements are fixed by caulking instead of adhesive.

It has been revealed in a process of performing the tests that since the adhesive can be formed in a very thin layer, the adhesive does not substantially affect the total thickness of 21 mm even if 84 core elements are stacked and fixed with the adhesive. Thus, even if adhesive is used for the rotor core, and caulking is used for the stator core, influence on thickness can be ignored. As a result, even if a different fixing method is used for the stator core and the rotor core, no problem is caused in thickness.

**[Table 1]**

| AVE CORE: t0.25 ADHESIVE | | | | | | |
|---|---|---|---|---|---|---|
| ORIFICE | CURRENT | INPUT | AIR FLOW | OUTPUT | EFFICIENCY | Speed |
| d (mm) | (A) | (W) | (1/S) | (W) | (%) | (r/min) |
| 50 | 4.06 | 918.0 | 45.80 | 42.18 | 4.6 | 33082 |
| 19 | 3.46 | 786.0 | 26.28 | 409.11 | 52.0 | 35594 |
| 16 | 3.23 | 736.0 | 20.42 | 387.33 | 52.6 | 36800 |
| 13 | 2.98 | 680.0 | 14.21 | 300.79 | 44.2 | 38358 |

**[Table 2]**

| AVE CORE : t0.25 CAULKING | | | | | | |
|---|---|---|---|---|---|---|
| ORIFICE | CURRENT | INPUT | AIR FLOW | OUTPUT | EFFICIENCY | Speed |
| d (mm) | (A) | (W) | (1/S) | (W) | (%) | (r/min) |
| 50 | 4.13 | 934.7 | 46.40 | 43.87 | 4.7 | 33187 |
| 19 | 3.52 | 799.3 | 26.40 | 414.73 | 51.9 | 35780 |
| 16 | 3.29 | 748.0 | 20.46 | 389.86 | 52.1 | 36920 |
| 13 | 3.02 | 691.0 | 14.27 | 305.56 | 44.2 | 38483 |

An ORIFICE is an adjustable opening that is provided in front of a fan of an electric motor to adjust a size of a circulation channel of air, and "d" of the ORIFICE (opening) equivalent to a practical range that is actually used in a vacuum cleaner is approximately 16 mm to 19 mm.

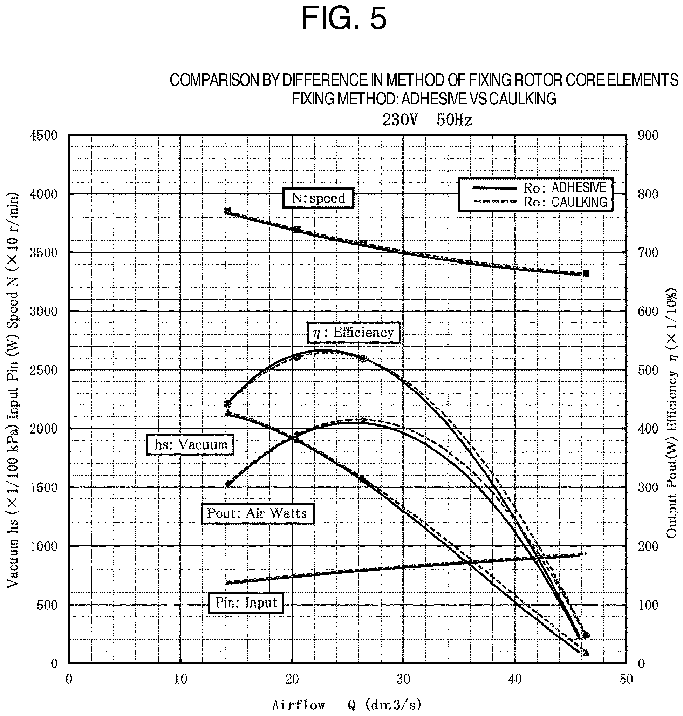

Fig. 5 shows a graph in which the horizontal axis represents AIR FLOW (air flow rate per unit time) shown in Tables 1 and 2 in test results acquired from the same electric motor, and the vertical axis represents results of a plurality of respective characteristics corresponding to the AIR FLOW.

As shown in Tables 1 and 2, the AIR FLOW is approximately 20 (1/s) to 27 (1/s) in a range of "d" of the ORIFICE, from 16 mm to 19 mm, equivalent to the practical range. Fig. 5 reveals that Efficiency of the electric motor including rotor core elements fixed with adhesive, corresponding to the practical range, is higher than Efficiency of the electric motor including rotor core elements fixed by caulking. Particularly, when "d" of the ORIFICE is 16 mm, there is a difference in the Efficiency by 0.5%, that is, the Efficiency of the electric motor including the rotor core elements fixed with adhesive is higher than that including the rotor core elements fixed by caulking. As a person skilled in the art understands, it is very difficult to improve maximum efficiency in units of the first decimal point in terms of percent, and thus improvement by a few fractions of a percent, such as acquired in the test results, is still very difficult to require effort. Particularly, since improvement in the efficiency in the practical range is recognized in the present invention, it is revealed that fixing rotor core elements in layers, using a thin electromagnetic steel plate, with adhesive, achieves very useful large effect.

Accordingly, it becomes possible to efficiently acquire high suction performance required for a recent vacuum cleaner in the practical range at a high rotary speed of 35,000 rpm.

## Claims

1. An electric motor (100) comprising:
a rotor core (11) that is fixed to a rotating shaft, and that radially extends in a direction orthogonal to an axial direction of the rotating shaft (4) to rotate with the rotating shaft at the center;
a commutator (30) that is coaxially fixed to the rotating shaft (4), and that rotates with the rotating shaft (4) to be brought into sliding contact with a brush; and
a stator core (21) arranged around the rotor core, being **characterized by** that:
the rotor core and the stator core are assemblies in which a plurality of rotor core elements and a plurality of stator core elements respectively, each formed of a thin electromagnetic steel plate, are stacked and fixed in layers,
each of the plurality of rotor core elements has a diameter including a tip (13a) of each of teeth (13) constituting slots, within a range of approximately 35 mm to 40 mm, and each of the teeth (13) has a length in a longitudinal direction that is one-third or more of a radius of the rotor core element,
each of the rotor core element and the stator core element has a thickness of less than 0.3 mm, and
at least surfaces of the respective rotor core elements, facing each other, are fixed with adhesive to form a stacked body of the rotor core elements.

2. The electric motor according to claim 1, wherein a thickness of each of the rotor core elements and the stator core elements is substantially 0.25 mm.

3. The electric motor according to claim 1 or 2, wherein the electromagnetic steel plate constituting the rotor core (11) and the electromagnetic steel plate constituting the stator core (21) have a characteristic as follows: iron loss in W15/50 is 2.30 w/kg or less; iron loss in W10/400 is 14.0 w/kg or less; and magnetic flux density B50(T) is 1.62 or more.

4. The electric motor according to any one of claims 1 to 3, wherein the rotor core (11) has ten or more slots.

5. The electric motor according to any one of claims 1 to 4, wherein the stator core (21) element has a pole portion (23) comprising a tip (23a) and a neck (25) wherein a substantially linear side (23c) is formed between the tip (23a) and the neck (25) so that a width between the extending side (23c) and a pole face (23b) of the pole portion (23) increases from the tip (23a) of the pole portion to the center of the pole portion.
